# EUROPÄISCHE PATENTSCHRIFT

(11) **EP 3 785 528 B1**
(45) Veröffentlichungstag und Bekanntmachung des Hinweises auf die Patenterteilung: **12.02.2025**
(21) Anmeldenummer: 20187869.1
(22) Anmeldetag: 27.07.2020
(51) Int. Cl.: A01G 31/02

(54) **PFLANZENKULTIVIERUNGSSYSTEM UND EINSATZ**
PLANT CULTIVATION SYSTEM AND INSERT
SYSTÈME DE CULTURE DES PLANTES ET INSERT

(30) Priorität: 26.08.2019 DE 102019212734
(43) Veröffentlichungstag der Anmeldung: 03.03.2021
(73) Patentinhaber: BSH Hausgeräte GmbH, 81739 München (DE)
(72) Erfinder: Blatnik, Gregor, 2381 Podgorje (SI); Dornik, Primoz, 3270 Lasko (SI); Holcinger, Tadej, 3220 Store (SI); Leng, Sascha, 80339 München (DE); Longhino, Werner, 84561 Mehring (DE); Pacnik, Roman, 2383 Smartno pri Slovenj Gradcu (SI); Scheffelmeier, Marco, 80687 München (DE); Tan, E-Lin, 85591 Vaterstetten (DE); Terrádez Alemany, Maria, 80469 München (DE)

(56) Entgegenhaltungen:
- WO-A1-2007/144117
- KR-B1- 101 433 836
- US-A- 4 299 054
- US-A1- 2005 011 118
- US-A1- 2005 274 073
- US-A1- 2010 031 566
- US-A1- 2015 156 973

## Beschreibung

Die vorliegende Erfindung betrifft einen mehrteiligen Einsatz eines Pflanzenkultivierungssystems zur Kultivierung von Pflanzen sowie ein Pflanzenkultivierungssystem.

Die Kultivierung von Pflanzen in Wohnbereichen zur Zierde, zur Schaffung eines gewünschten Raumklimas und/oder zur Nutzung beispielsweise als Gewürze oder sonstige Zutat zum Kochen oder Backen erfreut sich großer Beliebtheit. Die jeweiligen Pflanzen können dabei insbesondere in Erde oder als Hydrokultur in einem Substrat wurzeln; derartige Substrate, die bei der Hydrokultur in wassergefüllten Behältern angeordnet sind, können beispielsweise Tongranulate oder und/Steinwolle enthalten. In speziellen Anwendungen derartiger Hydrokultur werden hydroponische Pflanzsysteme eingesetzt, bei denen verschiedene die Entwicklung einer jeweiligen Pflanze beeinflussende Parameter automatisch überwacht und geregelt werden können.

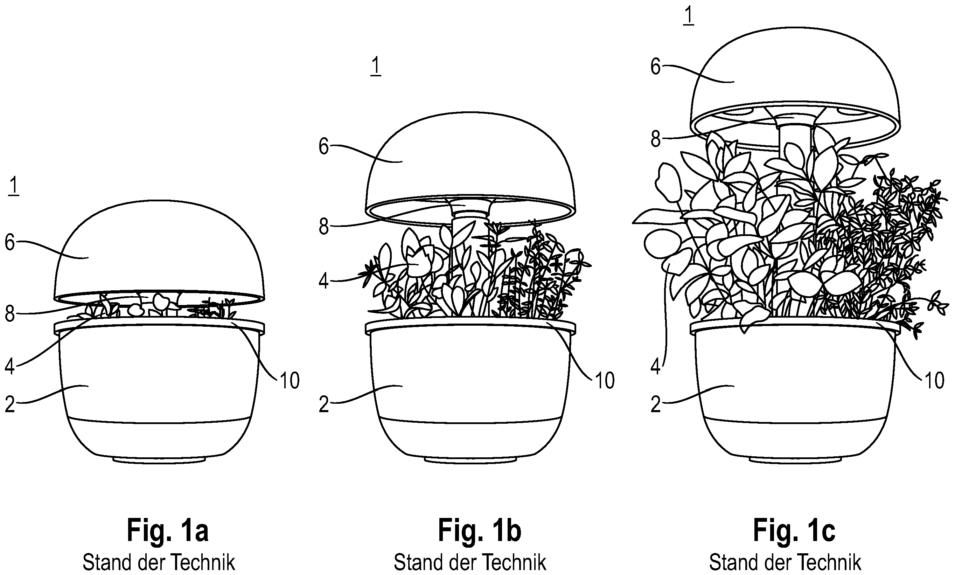

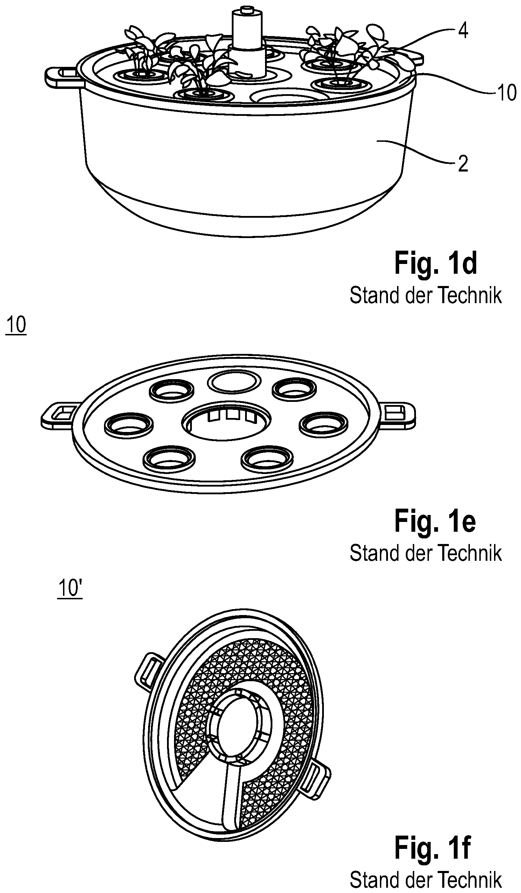

In den Figuren 1a bis 1c ist ein bekanntes Pflanzenkultivierungssystem der Anmelderin gezeigt. Das Pflanzenkultivierungssystem 1 hat eine Unterschale 2 als Wassertank für die kultivierten Pflanzen 4 und eine Oberschale 6, in der eine Pflanzenbeleuchtung 7 angeordnet ist. Die Oberschale 6 ist an einer zentralen und bevorzugterweise teleskopierbaren Vertikalstütze 8 angeordnet und wird je nach Wachstumstand der Pflanzen nach oben verschoben und somit von der Unterschale 2 entfernt. Auf der Unterschale 2 ist wie in Figur 1d deutlich gezeigt, ein Einsatz 10 abgelegt, der entweder als ein Kapselhalter 10 (Figuren 1d und 1e) zur Aufnahme von Samen- bzw. Pflanzenkapseln oder als eine Keimschale 10' (Figur 1f) zur Aufnahme von Saatgut ausgebildet ist. Es hat sich nun gezeigt, dass beim Verbraucher das Bedürfnis nach einer immer größeren Pflanzenvielfalt besteht, die unter Umständen ein unterschiedlich schnelles Wachstum aufweisen.

US 2015/156973 A1 offenbart relevanten Stand der Technik.

Die Aufgabe der vorliegenden Erfindung besteht darin, einen Einsatz für ein Pflanzenkultivierungssystem zu schaffen, der eine gesteigerte Pflanzenvielfalt ermöglicht. Zudem ist es Aufgabe der Erfindung ein Pflanzenkultivierungssystem zu schaffen, dass eine Kultivierung von einer gesteigerten Vielzahl von unterschiedlichen Pflanzen gleichzeitig ermöglicht.

Die Aufgabe wird gelöst durch einen Einsatz mit den Merkmalen des Patentanspruchs 1 und durch ein Pflanzenkultivierungssystem mit den Merkmalen des Patentanspruchs 5.

Ein erfindungsgemäßer Einsatz eines Pflanzenkultivierungssystems ist mehrteilig. Er hat zumindest zwei Subelemente, die dazu eingerichtet sind, Saatgut, Keimlinge, Sprossensamen, Setzlinge etc. aufzunehmen. Zudem hat der Einsatz ein Rahmenelement, das dazu eingerichtet ist, die zumindest zwei Subelemente in dem Pflanzenkultivierungssystem aufzunehmen bzw. zu halten.

Der erfindungsgemäße Einsatz besteht aus mehreren Elementen bzw. Einzelteilen, die zusammengesetzt den Einsatz bilden. Die das Rahmenelement einlegbaren Subelemente erhöhen die Flexibilität in der Artenvielfalt und somit eine höhere Individualisierung. Die Subelemente können individuell bestückt und getrennt voneinander dem Rahmen und somit dem Pflanzenkultivierungssystem entnommen werden. Eine Trennung des Pflanzenkultivierungssystems von zum Beispiel einer Stromversorgung entfällt. Die Pflanzen in den einzelnen Subelemente können je nach ihren Bedürfnissen mit Nährstoffen versorgt und bewässert werden, so dass jede Pflanze optimal kultivierbar ist. Zudem ermöglichten die Mehrteiligkeit und die Zerlegung des Einsatzes eine einfache und gewissenhafte Reinigung und Lagerung der Subelemente. Der Einsatz ist durch die Subelemente zudem modulartig aufgebaut und kann somit durch weitere Subelemente ergänzt werden.

Bevorzugterweise hat das Rahmenelement Ausnehmungen zum Einsetzen der Subelemente, wobei die Subelemente eine zur Innenkontur der Ausnehmungen korrespondierende Außenkontur haben. Hierdurch wird eine passgenaue Aufnahme der Einsätze in dem Rahmenelement erreicht. Zudem kann der Einsatz so als Deckel für ein Bewässerungsgefäß bzw. einen Wassertank wirken, und zwar dann, wenn der Einsatz mit seinem Rahmenelement in dem Pflanzenkultivierungssystem auf dem Bewässerungsgefäß abgelegt ist, was eine ungewollte Wasserverdunstung verhindert.

Zum Auffüllen eines Wasservorrates in dem Bewässerungsgefäßes ist es vorteilhaft, wenn das Rahmenelement in einen Körperabschnitt eine Einfüllöffnung zum Einfüllen von Wasser und zur Zugabe von Nährstoffen bzw. einer Nährlösung hat. Durch diese Maßnahme kann der Wasservorrat jederzeit aufgefüllt werden, ohne dass eines der Subelemente aus dem Rahmenelement entfernt werden muss. Zudem erlaubt die Einfüllöffnung, dass das Wasser beim Nachfüllen nicht über die Pflanzen in den Subelementen gegossen werden muss, wodurch deren Blätter mit Wasser benetzt werden würden, sondern den Pflanzen ausschließlich von unten Wasser zugeführt wird, was eine exakte Wasserwirtschaft ermöglicht.

Zwei bevorzugte Subelemente sind ein Kapselhalter zur Aufnahme von Samen-, Pflanzenkapseln und dergleichen sowie ein Einsatz eine Keimschale zur Aufnahme von losem Saatgut ist. Hierdurch können sowohl Saatkapseln als auch loses Saatgut verwendet werden. Samen-, Pflanzenkapseln, im Folgenden auch Saatkapsel genannt, enthalten beispielsweise ein Pflanzenzuchtsubstrat; welches ein beispielsweise ein Tongranulat und/oder ein Steinwollesubstrat enthält.

Die Pflanzenvielfalt im Hinblick auf die Keimschale lässt sich steigern, weil die Keimschale mehrere durch eine Trennwand getrennte Aufzuchtfelder nebeneinander hat. Die Aufzuchtfelder sind somit räumlich voneinander getrennt. Die zumindest eine Trennwand ist herausnehmbar und an einer anderen Stelle in dem Subelement anordbar, so dass die Größe der Aufzuchtfelder in Abhängigkeit von der Menge des aufzunehmenden Saatguts oder von der Pflanzenart einstellbar bzw. variierbar ist.

Bei einigen Pflanzen wirkt es sich günstig auf Ihre Kultivierung aus, wenn diese einem gewächshausartigem Klima ausgesetzt sind. Zur Realisierung eines solchen Gewächshauses ist eine für eine bevorzugte Strahlung transparente Abdeckung vorgesehen, um die heranwachsenden Pflanzen abzudecken. Bevorzugterweise besteht die Abdeckung aus einem wasserundurchlässigen durchsichtigen Kunststoff oder Glas. Zur einfachen und schnellen optischen Kontrolle ist es vorteilhaft, wenn die Abdeckung zudem für das menschliche Auge transparent ist. Die Abdeckung kann umfangsseitig geschlossen sein oder, zum Beispiel im Seitenwandbereich, mit Belüftungsöffnungen versehen sein.

Zur Individualisierung der jeweiligen Pflanzenkultivierung ist einem Subelement eine Abdeckung zugeordnet. Zudem können den einzelnen Aufzuchtfeldern einzelne derartiger Abdeckungen zugeordnet sein, wodurch noch mehr auf die Bedürfnisse der einzelnen Pflanzen eingegangen werden kann.

Aus Gründen der Handhabung ist die zumindest eine Abdeckung dazu eingerichtet, in Überkopfausrichtung das jeweilige Subelement zu tragen. Hierdurch wirkt die Abdeckung als bevorzugterweise wasserdichte Ablage für das jeweilige Subelement, wodurch eine Berührung des in der Abdeckung ablegten Subelements mit einem Untergrund wie einem Tisch verhindert wird. Das Subelement kann sicher in die Abdeckung abtropfen, eine Befeuchtung oder Verschmutzung des Tisches wird verhindert.

Eine hohe Standsicherheit der zumindest eine Abdeckung ist erzielt mit eine Abdeckung die Fußelemente zum Abstellen auf einem Untergrund hat.

Ein erfindungsgemäßes Pflanzenkultivierungssystem dient zur Pflanzenkultivierung, beispielsweise in einem Innenraum einer Wohnung bzw. eines Hauses oder auf einem Balkon. Es weist einen erfindungsgemäßen mehrteiligen Einsatz auf. Ein solches Pflanzenkultivierungssystem zeichnet sich durch die Ermöglichung einer hohen Pflanzenvielfalt und somit einer hohen Individualisierung aus. Insbesondere kann ein erfindungsgemäßes Pflanzenkultivierungssystem als ein hydroponisches Pflanzsystem ausgebildet sein.

Sonstige vorteilhafte Ausführungsformen der Erfindung sind Gegenstand weiterer Unteransprüche.

Im Folgenden wird die vorliegende Erfindung anhand von Zeichnungen näher erläutert. Es versteht sich, dass einzelne Elemente und Komponenten auch anders kombiniert werden können als dargestellt. Einander entsprechende Elemente sind figurenübergreifend mit denselben Bezugszeichen versehen und werden ggf. nicht mehrmals beschrieben.

Es zeigen schematisch:
- Figuren 1a bis 1f:: ein bekanntes Pflanzenkultivierungssystem der Anmelderin einschließlich mit zwei Einsätzen in Einzeldarstellung,
- Figuren 2a und 2b:: ein Ausführungsbeispiel eines erfindungsgemäßen Einsatzes für ein derartiges Pflanzenkultivierungssystem in Volllinien- und Phantomliniendarstellung im zusammengesetzten Zustand, und
- Figur 3a und 3b: den Einsatz nach den Figuren 2a und 2b in Explosionsdarstellungen mit Volllinien- und Phantomlinien.

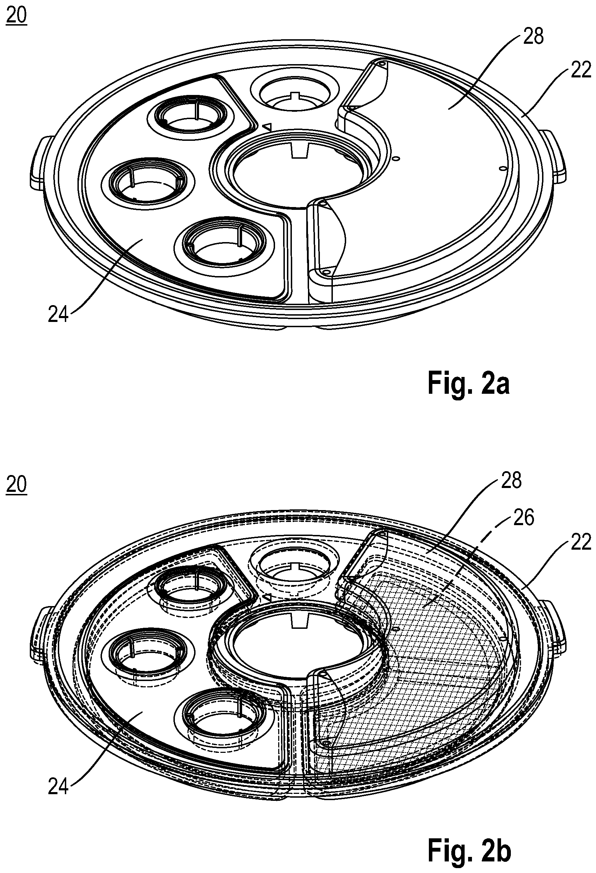

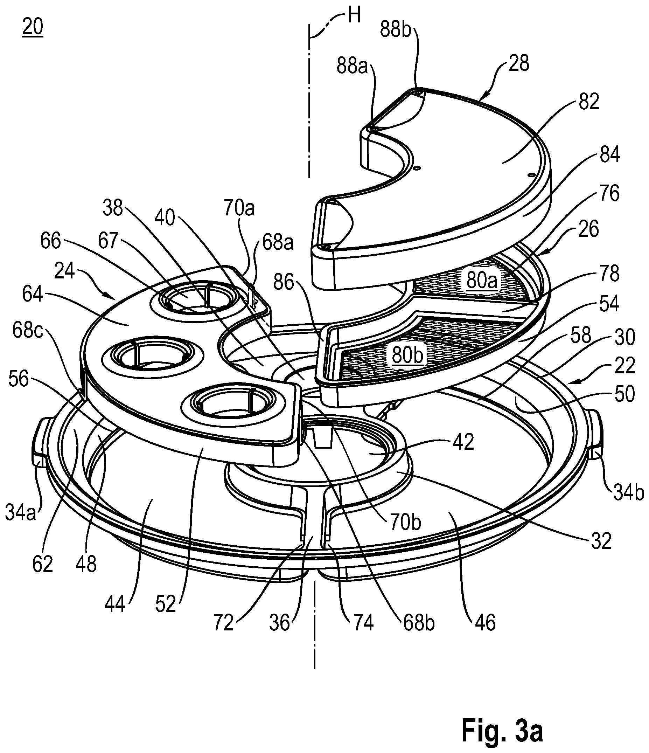

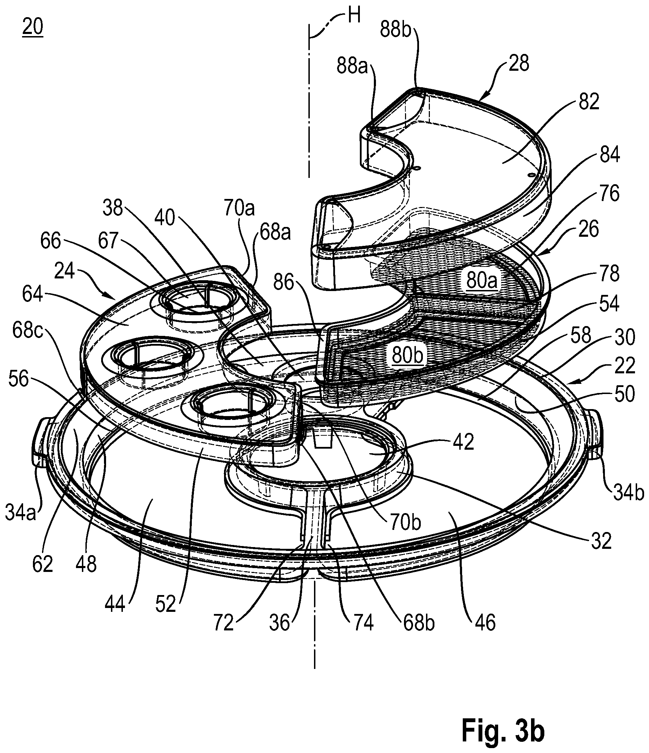

In den Figuren 2a und 2b ist ein Ausführungsbeispiel eines erfindungsgemäßen Einsatzes 20 für ein in den Figuren 1a bis 1d gezeigtes Pflanzenkultivierungssystem illustriert. Der Einsatz 20 ist mehrteilig und weist ein Rahmenelement 22 zum Auflegen auf einen Wassertank bzw. ein Bewässerungsgefäß des Pflanzenkultivierungssystems sowie zumindest zwei in das Rahmenelement 22 einzusetzende Subelemente 24, 26 zur Aufnahme von Saatgut, Pflanzen, Sprösslinge und dergleichen auf. Der Wassertank ist beispielsweise eine Unterschale des Pflanzenkultivierungssystems (siehe einleitende Erläuterungen zu dem Figuren 1a bis 1d). Das gemäß den Figuren 2a bis 2b linke Supplement 24 ist als ein Kapselhalter und das gemäß den Figuren 2a bis 2b rechte Supplement ist als eine Keimschale ausgebildet. Zudem verfügt der Einsatz 20 in diesem Ausgangsbeispiel über eine Abdeckung 28 zum Abdecken des Subelementes 26 bzw. der Keimschale. Eine ausführliche Erläuterung des mehrteiligen Einsatzes 20 erfolgt in den Figuren 3a und 3b.

Das Rahmenelement 22 hat einen Außenring 30 und einen zu diesem konzentrisch angeordneten Innenring 32. Der Außenring 30 ist an seinem Außenumfang mit zwei entgegengesetzt zueinander angeordneten Handgriffen 34a, b zur Handhabung des Einsatzes 20, insbesondere zum Einsetzen und Herausnehmen aus dem Pflanzenkultivierungssystem, ausgebildet. Innenumfangsseitig hat der Außenring 30 eine radial nach innen abfallende Ringfläche 62.

Der Innenring 32 ist über einen geraden und zu einer Vertikalachse bzw. Hochachse H des Rahmenelements 22 radial verlaufenden Steg 36 sowie einen sich in Verlängerung des Stegs 36 an einer entgegengesetzten Seite des Innenrings 32 angreifenden fächerartig erweiterten Verbindungabschnitt 38 in dem Außenring 30 gehalten. Im Verbindungsabschnitt 38 ist eine Einfüllöffnung 40 zum Einfüllen von Wasser, zur Zugabe von Nährstoffen und dergleichen in das Befestigungsgefäß ausgebildet.

Der Innenring 32 bildet innenumfangsseitig einen Durchlass 42 für eine Vertikalstütze des Pflanzenkultivierungssystems zur Halterung einer Oberschale (siehe einleitende Erläuterungen zu dem Figuren 1a bis 1d). Außenumfangsseitig begrenzt der Innenring 32 zusammen mit dem Steg 36, dem Verbindungabschnitt 38 sowie eines jeweiligen sich zwischen dem Verbindungsabschnitt 38 und dem Steg 36 erstreckenden, nicht gesondert bezifferten Innenumfangsabschnitt des Außenrings 30 zwei Ausnehmungen 44, 46 zur Aufnahme jeweils einer der Subelemente 24,26.

Die Ausnehmungen 44, 46 durchsetzen in vertikaler Richtung das Rahmenelement 22 und haben in Draufsicht von oben eine Bogen- bzw. Nierenform. Sie haben jeweils eine vertikale Innenwandung 48, 50 und weisen an ihrem gemäß den Darstellungen in den Figuren 3a und 3b unterem Ende der Innenwandungen 48, 50 jeweils einen radial nach innen weisenden umlaufenden Innenkragen 56, 58 auf. Sie sind insbesondere gleich bzw. identisch ausgebildet, so dass die Subelemente 24,26 in jede Ausnehmung 44, 46 eingesetzt werden können. Entsprechend sind die Subelemente 24, 26 von ihrer Außenkontur gleich bzw. nahezu gleich ausgebildet, um eine derartige wechselnde Positionierung in der jeweils anderen Ausnehmung 44, 46 zu ermöglichen.

Die Subelemente 24, 26 haben jeweils eine vertikale Außenwandung 52, 54, die korrespondierend zur Innenwandung 48, 50 des Rahmenelementes 22 verläuft. Die Subelemente 24, 26 haben somit eine gleichartige Bogen- bzw. Nierenform wie die Ausnehmungen 44, 46.

Das Supplement 24 bzw. der Kapselhalter hat eine plane Oberfläche 64, in der beispielsweise drei Öffnungen 66 zur Aufnahme jeweils einer nicht gezeigten Saatkapsel ausgebildet sind. Die Öffnungen 66 haben jeweils einen sich nach unten erstreckenden Hals 67. Aus Gründen der Übersichtlichkeit ist lediglich eine der Öffnungen 66 beziffert. Die Höhe seiner Außenwandung 52 ist so auf die Höhe der Innenwandungen 48 der Ausnehmungen 44, 46 abgestimmt, dass im eingesetzten Zustand das Subelement 24 mit seiner Oberfläche 64 bündig mit einer Oberfläche des Rahmenelementes 22 abschließt.

Im eingesetzten Zustand stützt sich das Subelement 24 mittels seiner Außenwandung 52 auf dem Innenkragen 56 der Ausnehmung 52 ab.

An seiner Außenwandung 52 hat das Supplement 24 drei Rastelemente 68a, b, c zum lösbaren Verrasten mit dem Rahmenelement 22 im eingesetzten Zustand des Subelements 24. Jeweils ein Rastelement 68a, b ist an einer Stirnseite 70a, b der Außenwandung 52 angeordnet. Das dritte Rastelement 68c ist mittig an einem konkaven, nicht bezifferten Flächenabschnitt der Außenwandung 52 ausgebildet, der sich zwischen den Stirnseiten 70a, b erstreckt. Die Rastelemente 68a, b, c sind als Rasthaken ausgebildet, von denen jeweils einer durch ihre Anordnung lösbar unter den Außenring 30, den Steg 36 und den Verbindungsabschnitt 38 des Rahmenelements 22 greifen können. Zum notwendigen Durchführen der Rastelemente 68a, b, c zum Herbeiführen der Verrastung ist in die Innenkragen 56, 58 der Ausnehmungen 44, 46 jeweils im Bereich eines Rastelementes 68a, b, c eine Aussparung 72, 74 eingebracht. Aus Gründen der Übersichtlichkeit ist lediglich eine Aussparung 72, 74 pro Ausnehmung 44, 46 beziffert.

Das Subelement 26 bzw. die Keimschale hat einen gitterförmigen Boden 76 und ist nach oben hin geöffnet. Sie ist über eine radial verlaufende Trennwand 78 in zwei nebeneinander liegende Aufzuchtfelder 80a, b, unterteilt, sodass beispielsweise unterschiedliche Pflanzen in dem Subelemente 26 räumlich getrennt voneinander gezüchtet werden können. Am oberen Ende hat das Subelement 26 an seiner Außenwandung 54 einen umlaufenden Außenkragen 86, mittels dem es im eingesetzten Zustand auf dem Innenkragen 54 der Ausnehmung 46 aufliegt und somit gehalten wird.

Die Abdeckung 28 hat eine Doppelfunktion. Eine erste Funktion der Abdeckung 28 sieht die Verwendung als Deckelement vor, um beispielsweise ein gewächsausartigen Aufzuchtklima für die in dem Subelemente 26 gezüchteten Pflanzen zu schaffen. Sie besteht aus einem für das menschliche Auge und für die jeweilige Beleuchtungsstrahlung transparente Material, insbesondere Kunststoff oder Glas. Sie hat eine transparente plane Deckelfläche 82, von der sich in der in den Figuren 2a bis 3b gezeigten Verwendung als Deckelelement eine umlaufende transparente vertikale Seitenwandung 84 nach unten erstreckt.

Die Seitenwandung 84 bildet eine zur Ausnehmung 46 korrespondierende Außenkontur, so dass die Abdeckung 28 wie die beiden Subelemente 24, 26 ebenfalls bogen- bzw. nierenförmig ist. Bei der Verwendung als Deckelelement liegt die Abdeckung 28 auf Außenkragen 86 der Außenwandung 54 des Subelemente 26 auf.

Da Außenkragen 86 des Subelements 26 zudem zur Abstützung des Subelementes 26 auf dem Innenkragen 58 der Ausnehmung 46 im eingesetzten Zustand dient, taucht die Abdeckung 28 bei Verwendung als Deckelelement mit ihrer Seitenwandung 84 in die Ausnehmung 46 ein und ist somit lagegesichert.

Eine zweite Funktion sieht die Verwendung der Abdeckung 28 als wasserdichte Ablage für das Subelement 26 auf einem Untergrund außerhalb des Pflanzenkultivierungssystems vor (nicht dargestellt). Hierzu wird die Abdeckung aus ihrer in den Figuren 2a bis 2b gezeigten Position in eine umgedrehte Überkopfposition gebracht, sodass sich die Deckelfläche 82 unter der Seitenwandung 84 befindet. Zur Stabilisierung der Auflage der Abdeckung 28 auf einem Untergrund weist diese gleichmäßig über die Deckelfläche 26 verteilte Fußelemente 86a, b auf. Insgesamt sind hier sechs Fußelemente 88a, 88b vorgesehen, von denen aus Gründen der Übersichtlichkeit lediglich zwei beziffert sind. Die Fußelemente 88a, 88b sind im Randbereich der Deckelfläche 82 angeordnet und insbesondere gummiartige Erhebungen, die ein versehentliches verschieben bzw. verrutschen der Abdeckung 28 auf dem Untergrund verhindern.

Es sei erwähnt, dass das Subelement 24 auch mehr oder weniger als drei Öffnungen zur Aufnahme von Saatkapseln aufweisen kann. Zudem sei erwähnt, dass das Subelement 26 mehr oder weniger als zwei Aufzuchtfelder aufweisen kann. Des Weiteren sei erwähnt, dass der mehrteilige Einsatz auch die Verwendung von mindestens zwei gleichartigen Subelementen 24 bzw. 26 in dem Rahmenelement 22 ermöglicht. So können die Subelemente nur als einzelne Kapselhalter 24 oder als einzelne Keimschalen 26 ausgebildet sein.

Offenbart sind ein mehrteiliger Einsatz eines Pflanzenkultivierungssystems, mit zumindest zwei Subelementen, die dazu eingerichtet sind, Saatgut, Keimlinge, Sprossensamen, Setzlinge etc. aufzunehmen und mit einem Rahmenelement zur Aufnahme der zumindest zwei Subelemente in dem Pflanzenkultivierungssystem, sowie ein Pflanzenkultivierungssystem mit einem derartigen Einsatz.

### Bezugszeichen

- 1: Pflanzenkultivierungssystem
- 2: Unterschale
- 4: Pflanze
- 6: Oberschale
- 7: Pflanzenbeleuchtung
- 8: Vertikalführung
- 10, 10': Einsatz
- 20: Einsatz
- 22: Rahmenelement
- 24: Subelement Kapselhalter
- 26: Subelement Keimschale
- 28: Abdeckung
- 30: Außenring
- 32: Innenring
- 34a, b: Handgriff
- 36: Steg
- 38: Verbindungsabschnitt / Körperabschnitt
- 40: Einfüllöffnung
- 42: Durchlass
- 44: Ausnehmung
- 46: Ausnehmung
- 48: Innenwandung / Innenkontur
- 50: Innenwandung / Innenkontur
- 52: Außenwandung / Außenkontur
- 54: Außenwandung / Außenkontur
- 56: Innenkragen
- 58: Innenkragen
- 62: Ringfläche
- 64: Oberfläche
- 66: Öffnung
- 67: Hals
- 68a, b, c: Rastelement
- 70a, b: Stirnseite
- 72: Aussparung
- 74: Aussparung rechte Ausnehmung
- 76: Boden
- 78: Trennwand
- 80a, b: Aufzuchtfelder
- 82: Deckelfläche
- 84: Seitenwandung
- 86: Außenkragen
- 88a, b: Fußelement

- H: Hochachse / Vertikalachse

## Patentansprüche

1. Mehrteiliger Einsatz (20) eines Pflanzenkultivierungssystems, mit zumindest zwei Subelementen (24, 26), die dazu eingerichtet sind, Saatgut, Keimlinge, Sprossensamen, Setzlinge etc. aufzunehmen und mit einem Rahmenelement (22) zur Aufnahme der zumindest zwei Subelemente (24, 26) in dem Pflanzenkultivierungssystem, wobei zumindest eine transparente Abdeckung (28) vorgesehen ist, um die heranwachsenden Pflanzen abzudecken, wobei einem Subelement eine Abdeckung (28) zugeordnet ist, **dadurch gekennzeichnet, dass** die zumindest eine Abdeckung (28) dazu eingerichtet ist, in Überkopfausrichtung das jeweilige Subelement (24, 26) zu tragen, wobei die zumindest eine Abdeckung (28) Fußelemente (88a, 88b) zum Abstellen auf einem Untergrund hat, wobei ein Subelement (26) eine Keimschale zur Aufnahme von losem Saatgut ist und mehrere durch eine Trennwand (78) getrennte Aufzuchtfelder (80a, 80b) nebeneinander hat und die Trennwand (78) herausnehmbar und an einer anderen Stelle in dem Subelement (26) anordbar ist.

2. Einsatz nach Patentanspruch 1, wobei das Rahmenelement (22) Ausnehmungen (44, 46) zum Einsetzen der Subelemente (24, 26) hat und diese eine zur Innenkontur (48, 50) der Ausnehmungen (44, 46) korrespondierende Außenkontur (52, 54) haben.

3. Einsatz nach Patentanspruch 1 oder 2, wobei das Rahmenelement (22) in einem Körperabschnitt (38) eine Einfüllöffnung (40) zum Einfüllen von Wasser hat.

4. Einsatz nach Patentanspruch 1, 2 oder 3, wobei ein Subelement (24) ein Kapselhalter zur Aufnahme von Saatkapseln ist.

5. Pflanzenkultivierungssystem mit einem mehrteiligen Einsatz (20) nach einem der vorhergehenden Patentansprüche.

## Claims

1. Multi-part insert (20) of a plant cultivation system, having at least two subelements (24, 26) which are designed to receive seeds, seedlings, tender shoots, saplings and so on, and having a frame element (22) for receiving the at least two subelements (24, 26) in the plant cultivation system, wherein at least one transparent cover (28) is provided, in order to cover the growing plants, wherein a cover (28) is assigned to a subelement, **characterised in that** the at least one cover (28) is designed to support the respective subelement (24, 26) in the overhead alignment, wherein the at least one cover (28) has base elements (88a, 88b) for placing on a subsurface, wherein a subelement (26) is a germination tray for receiving seeds in bulk and has a number of cultivation fields (80a, 80b), adjacent to one another, separated by a partition wall (78), and the partition wall (78) can be removed and arranged at another point in the subelement (26).

2. Insert according to claim 1, wherein the frame element (22) has recesses (44, 46) for inserting the subelements (24, 26) and these have an outer contour (52, 54) which corresponds to the inner contour (48, 50) of the recesses (44, 46).

3. Insert according to claim 1 or 2, wherein the frame element (22) in a body section (38) has a filler opening (40) for filling water.

4. Insert according to claim 1, 2 or 3, wherein a subelement (24) is a capsule holder for receiving seed capsules.

5. Plant cultivation system with a multi-part insert (20) according to one of the preceding claims.

## Revendications

1. Insert en plusieurs parties (20) d'un système de culture de plantes, avec au moins deux sous-éléments (24, 26), qui sont aménagés pour recevoir des semences, des germes, des graines à germer, des plants, etc. et avec un élément de cadre (22) pour l'accueil des au moins deux sous-éléments (24, 26) dans le système de culture de plantes, dans lequel au moins un couvercle transparent (28) est prévu pour couvrir les plantes en croissance, dans lequel un couvercle (28) est associé à un sous-élément, **caractérisé en ce que** l'au moins un couvercle (28) est aménagé pour supporter le sous-élément respectif (24, 26) en orientation superposée, dans lequel l'au moins un couvercle (28) a des éléments de pied (88a, 88b) pour la pose sur un support, dans lequel un sous-élément (26) est une coquille de germination pour l'accueil de semences en vrac et a plusieurs champs de culture juxtaposés (80a, 80b) séparés par une paroi de séparation (78) et la paroi de séparation (78) est amovible et peut être disposée en un autre endroit dans le sous-élément (26).

2. Insert selon la revendication 1, dans lequel l'élément de cadre (22) a des évidements (44, 46) pour l'insertion des sous-éléments (24, 26) et ceux-ci ont un contour extérieur (52, 54) correspondant au contour intérieur (48, 50) des évidements (44, 46).

3. Insert selon la revendication 1 ou 2, dans lequel l'élément de cadre (22) a, dans une section de corps (38), un orifice de remplissage (40) pour le remplissage en eau.

4. Insert selon la revendication 1, 2 ou 3, dans lequel un sous-élément (24) est un support de capsules pour l'accueil de capsules de semences.

5. Système de culture de plantes avec un insert en plusieurs parties (20) selon l'une des revendications précédentes.
